# EUROPEAN PATENT APPLICATION

(11) **EP 3 067 228 A1**
(43) Date of publication of application: **14.09.2016**
(21) Application number: 16156739.1
(22) Date of filing: 22.02.2016
(51) Int. Cl.: B60H 1/34, F24F 13/06

(54) **STEERING NOZZLE OF AN AIR FLOW AND A SUPPLY AIR DEVICE**

(30) Priority: 23.02.2015 FI 20155122
(71) Applicant: Climecon OY, 00880 Helsinki (FI)
(72) Inventor: Uksila, Tommi, FI-00140 Helsinki (FI); Soini, Teppo, FI-45360 Kouvola (FI)
(74) Representative: Berggren Oy Ab

(57) **Abstract**

The steering nozzle (122) of an air flow has a first flow aperture (124) and a directing organ (130) for steering the air flow to be led through the first flow aperture to the first flow direction (F). The steering nozzle further has at least one second flow aperture (140), which is arranged to steer the air flow to be led through it to the second flow direction (S) intersecting with the first flow direction (F). The intersecting air flow flowing through the second flow apertures turns the air flow flowing through the first flow aperture. The cross-sectional area of the first flow aperture is preferably substantially bigger than the cross-sectional area of the second flow apertures. The second flow apertures can be arranged as a group of apertures in the vicinity of the first flow aperture so that only part of the second flow apertures is arranged to steer the air flow to be led through them to the second flow direction intersecting with the first flow direction. In connection with the second flow apertures there can be a directing instrument, such as a steering pipe for directing the air flow to be led through the second flow apertures.

## Description

The invention relates to a steering nozzle of an air flow, with a first flow aperture and a directing organ to steer the air flow to be led through the first flow aperture to the first flow direction. The invention further relates to a supply air device, which has a casing with an inlet assembly for connecting to a supply air channel and a wall with at least one first flow aperture, an directing organ for steering the air flow to be led through the first flow aperture to the first flow direction, and a number of second flow apertures.

Elongated supply air devices installed in the ceiling of room space are often used in directing supply air in the ventilation systems of large and high spaces, the walls of the supply air devices being equipped with flow orifices substantially along the whole length of the supply air device. Part of the air flow orifices can be provided with a steering nozzle for directing the supply air flow to the desired direction and for mixing the supply air flow with indoor air. In addition the wall of the supply air device can have densely perforated areas, which have a number of small flow-through apertures for air. The purpose of these perforated areas is to offer the supply air as big an air flow path as possible through the wall of the supply air device.

For reducing the disturbing sensation of draught and for achieving efficient mixing with indoor air, the in-flowing fresh supply air is often turned to almost a horizontal direction by means of steering nozzles so that supply air flows substantially along the outer surface of the wall of the supply air device. In this case impurities present in the supply air and indoor air travel along with the supply air flow and adhere to the wall of the supply air device as a thick layer around the steering nozzle. Removing the adhered dirt from the surface of the supply air device requires extra cleaning steps, which causes costs.

In document FI 117727 there is disclosed a supply air beam, the wall of which contains a perforated strip comprising small apertures and extending substantially for the whole length of the wall. On both sides of the strip there are wall sections with a number of flow orifices arranged in line, the flow orifices being provided with directional steering nozzles. The size and number of the apertures and steering nozzles are dimensioned so that the major part of the in-flowing supply air flows through the small holes in the perforated strips. The purpose of the slight air flow flowing through the steering nozzle is to aim to steer the supply air flowing through the perforated areas to the desired direction.

The objective of the invention is to introduce a steering nozzle of an air flow and a supply air device, with which defects relating to known supply air devices can be reduced.

The objectives of the invention are achieved by a steering nozzle and supply air device characterized in what is disclosed in the independent claims. Some advantageous embodiments of the invention are disclosed in the dependent claims.

The object of the invention is a steering nozzle of an air flow, which has a first flow aperture and directing organ for steering the air flow to be led through the first flow aperture to the first flow direction. By means of the directing organ the flow direction of air flowing through the steering nozzle can be turned even as much as 90 degrees. The flow direction of air can also be turned less than 90 degrees with the steering nozzle, for example, 45 - 60 degrees or 60 - 75 degrees. In addition, the steering nozzle has at least one second flow aperture, which is arranged to steer the air flow to be led through it to a second flow direction intersecting with the first flow direction. Thus, the first flow aperture and the second flow apertures are all located in the same steering nozzle. The intersecting air flow flowing through the second flow apertures, the so called secondary flow, turns the air flow flowing through the first flow aperture, the so called primary flow, to the direction of the secondary flow. The distribution of the total flow between the primary and secondary flows can be influenced by the selection of cross-sectional areas of the flow apertures. The first flow aperture preferably has a first cross-sectional area and the second flow aperture/apertures have a second cross-sectional area, the second cross-sectional area being substantially smaller than the first cross-sectional area. In this case a substantially bigger amount of air can flow through the first flow aperture than through the second flow aperture.

An advantageous embodiment of the steering nozzle of an air flow of the invention comprises a number of second flow apertures arranged as a group of apertures in the vicinity of the first flow aperture so that at least part of the second flow apertures is arranged to steer the air flow to be led through them to the second flow direction intersecting with the first flow direction. In this embodiment there are thus several second flow apertures. All of the air flows flowing through the second flow apertures do not necessarily intersect with the air flow flowing through the first flow aperture. The second flow apertures can be arranged as groups of apertures in a form of an arc of a circle, surrounding the first flows partly or entirely. Preferably the added cross-sectional area of those second flow apertures, which are arranged to steer the air flow to the second flow direction intersecting with the first flow direction, is smaller than the cross-sectional area of the first flow aperture.

In a second advantageous embodiment of the steering nozzle of an air flow of the invention the said directing organ for steering the air flow to be led through the first flow aperture to the first flow direction comprises a steering surface arranged in connection with at least one first flow aperture. The steering surface can be a straight or curved, flat or trough-shaped surface. The steering surface can be part of a tubular structure.

In a third advantageous embodiment of the steering nozzle of an air flow of the invention there is provided a directing device in connection with the second flow apertures for directing the air flow to be led through the second flow apertures. The said directing device preferably comprises a steering pipe arranged as an extension for the second flow aperture. Steering the secondary flow flowing through the second flow apertures to the desired second flow direction thus occurs by means of the directing device. Because the steering of the primary flow flowing through the first flow aperture and the secondary flows flowing through the second flow apertures takes place in different parts, the flows can be steered to the desired directions independently from each other.

In yet another advantageous embodiment of the steering nozzle of an air flow of the invention there is provided a lid with a first surface and a second surface, the first flow aperture and the second flow apertures being arranged in the lid. The first surface of the lid is preferably flat and the said directing organs and directing devices are arranged on the second surface of the lid. The steering nozzle is intended to be fastened to the supply air device so that the first surface of the lid is the surface that stays visible. The second surface of the lid is set against the supply air device and thus stays invisible. By placing all the parts needed for the directing of the air flows to the second surface of the lid, the first surface of the steering nozzle can be made a flat, easily cleanable surface.

In yet another advantageous embodiment of the steering nozzle of an air flow of the invention there are provided adhesion organs for attaching to the flow orifice in the wall of the supply air device. The adhesion organs preferably comprise a continuous or piecewise continuous slot, to which the free edge of the flow orifice can be fitted. Because of the adhesion organs the steering nozzle can be fastened in place to the supply air device without separate attachment organs.

The supply air device, which is the object of the invention, has a casing with an inlet assembly for connecting to the supply air channel and a wall with at least one first flow aperture. The casing of the supply air device can be shaped in a desired way. The casing can be, for example, an elongated, box-shaped or cylindrical part. The supply air device further contains a directing organ for steering the air flow to be led through the first flow aperture to the first flow direction and a number of second flow apertures. The directing organ can be used for turning the flow direction of the air flow discharging from the first flow aperture towards the tangent of the wall of the casing. The second flow apertures are arranged as groups of apertures in the vicinity of the first flow apertures so that at least part of the second flow apertures of the group of apertures in the vicinity of the first flow aperture are arranged to steer the air flow to be led through them to the second flow direction intersecting with the first flow direction. The intersecting air flow flowing through the second flow apertures turns the direction of the air flow flowing through the first flow aperture outwards from the wall of the casing.

In an advantageous embodiment of the supply air device of the invention the said second flow apertures are provided to the wall of the casing.

In a second advantageous embodiment of the supply air device of the invention the wall of the casing has at least one flow orifice, which has a steering nozzle of an air flow, and the said first and second flow apertures are arranged into the said steering nozzles.

It is an advantage of the invention that it prevents the impurities floating in air from accumulating and adhering as thick layers to the outer surface of the wall of the supply air device or to the ceiling or wall surfaces of the room space near the supply air device. Thus the invention reduces the need to clean the supply air devices and improves the hygiene level of the room space. Because supply air devices are usually located in places, which are hard to access in the vicinity of the ceiling of the room space, the reduced cleaning need produces a significant decrease in cleaning costs.

It is further an advantage of the invention that it improves and makes faster the mixing of fresh air flowing through the steering nozzle into the indoor air so that the length of the so-called throw pattern becomes shorter and the mixing ratio becomes better. The fast mixing of fresh supply air flow evens out the temperature differences of indoor air, which reduces significantly the sensation of draught.

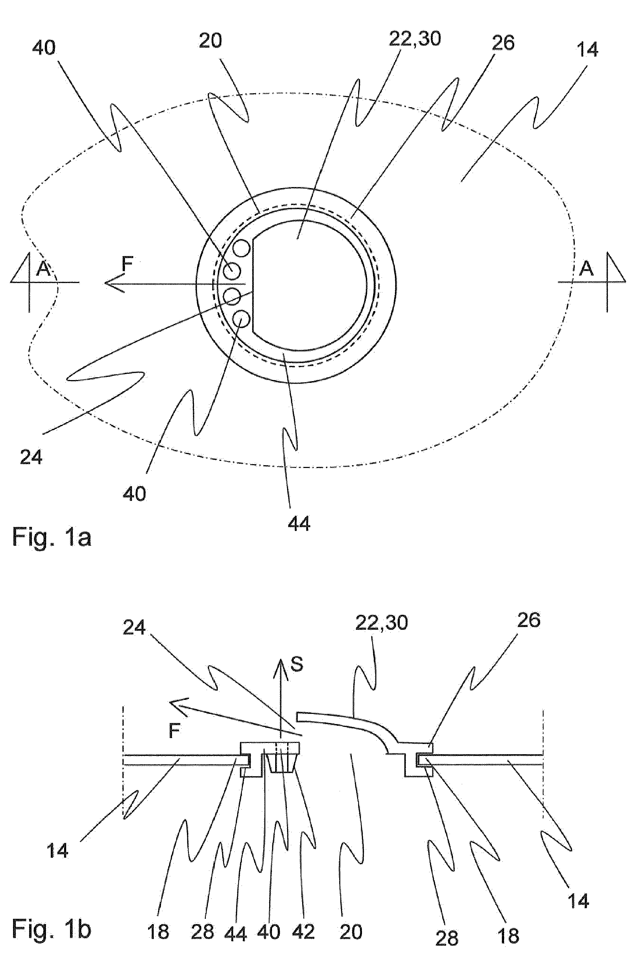

The invention is next explained in detail. In the specification reference is made to the enclosed drawings, in which
Figure 1 a is an exemplary top view of a steering nozzle of an air flow according to the invention;
Figure 1 b is a cross-sectional view of the steering nozzle illustrated in Figure 1a;
Figure 2a is an exemplary view of an advantageous embodiment of the steering nozzle of an air flow according to the invention seen obliquely from above;
Figure 2b is an exemplary view of an embodiment of the steering nozzle of figure 2a seen obliquely from below;
Figure 3 is an exemplary view of a supply air device according to the invention seen obliquely from above.

Figures 1 a and 1 b illustrate in an exemplary manner a steering nozzle 22 of an air flow of a supply air device of the invention and part of the casing wall 14 of the supply air device surrounding the steering nozzle. Figure 1 a illustrates the steering nozzle and part of the wall seen from above and Figure 1b as a cross-sectional view cut from the cutting plane A-A. Both figures are next explained simultaneously.

The steering nozzle 22 is arranged to the circular flow orifice 20 in the casing wall 14 of a supply air device. The steering nozzle has a circular lid 44, the edge of which is provided with a circulating collar 26. The farthermost edge surface has a circulating slot 28, into which the free edge 18 of the flow orifice 20 is fitted. The width of the slot is substantially as big as the thickness of the wall 14, so that the steering nozzle stays in place in the first flow aperture by the effect of the compression force between the side walls of the slot and the free edge of the flow aperture. The steering nozzle is made of a suitable ductile material, such as plastic, rubber or silicone.

In the middle of the lid 44 of the steering nozzle 22 there is a dome-shaped steering surface 30, the edges of which abut the lid 44. On one edge of the steering surface there is an open first flow aperture 24, through which air can flow out of the casing. The first flow aperture opens substantially in the direction of the plane of the part of the lid in front of the flow aperture. The curved steering surface of the steering nozzle and the opening direction of the first flow aperture 24 force the air flow flowing through the steering nozzle to turn to the first flow direction F, which can extend almost in the direction of the plane of the lid 44 or which at least deviates substantially from the direction perpendicular to the lid and the casing wall 14. The air flow flowing through the first flow aperture 24 of the steering nozzle is from now on called the primary flow.

The steering nozzle installed in place into the circular flow orifice 20 can be rotated around its rotational axis in the direction of the normal of the lid so that the first flow aperture opens to the desired first flow direction F. The flow orifice can also be of some other shape than circular. In this case the steering nozzle can be made in two parts so that the steering surface is fitted into the circular aperture in the lid. The primary flow is then directed by rotating the steering surface.

In front of the mouth of the first flow aperture 24 there is provided a number of second flow apertures 40 in an arc-shaped formation so that air can flow out of the casing through these apertures. As an extension for each second flow aperture there is provided a steering pipe 42 extending to the interior of the casing of the supply air device, the inner diameter of which is substantially as big as the diameter of the second flow aperture. Air flows out of the casing through the steering pipe and the second flow aperture in the second flow direction S, which is substantially perpendicular in relation to the lid 44 and the casing wall 14. The term secondary flow is from now on used of the air flow flowing through the second flow apertures. The perpendicular directing of the secondary flow in relation to the lid and casing wall is achieved by means of the steering effect of the steering pipes 42. In order to achieve sufficient steering effect the length of the steering pipe is preferably at least equal to the diameter of the second flow aperture. Due to the difference in the sizes of the first and second flow apertures the primary flow is substantially bigger than the secondary flow. The secondary flow flowing out through the second flow apertures meets the primary flow flowing out from the first flow aperture 24 and turns the first flow direction F away from the surface of the casing wall 14.

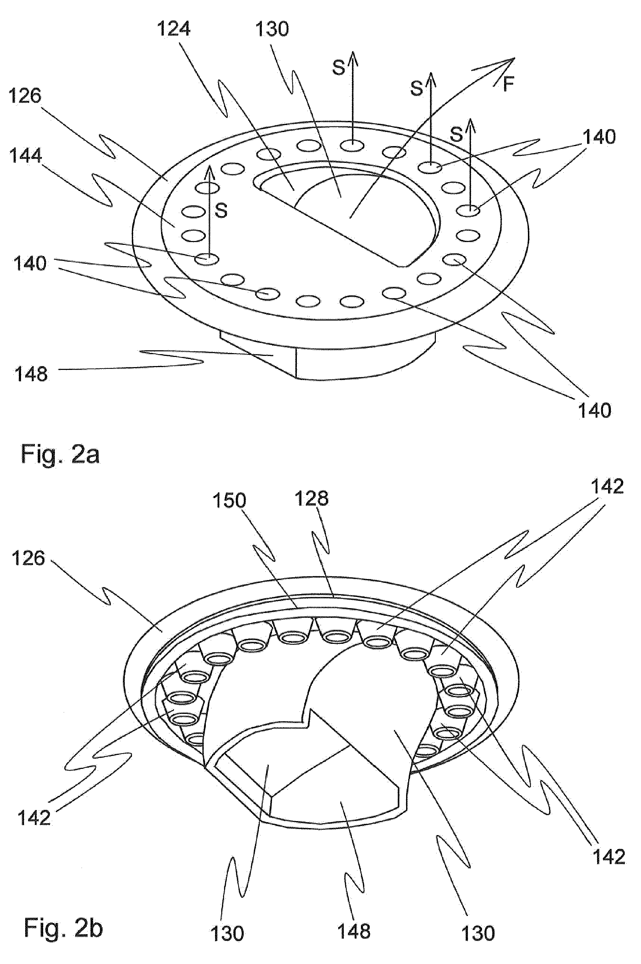

Figures 2a and 2b illustrate in an exemplary manner an advantageous embodiment of a steering nozzle of the invention. Figure 2a presents the embodiment seen obliquely from above and Figure 2b illustrates the same embodiment obliquely from below. The content of both figures is next explained simultaneously.

In the embodiment illustrated in the figures there is provided the lid 144, the collar 126 circulating around its edges. In the figures the lid has a circular shape, but it can also be of some other shape, such as a square or polygon. The thickness of the lid and the edge of the collar attaching to the lid is preferably few millimetres. The thickness of the collar decreases when travelling towards the free edge of the collar. The lid has a first surface remaining visible in the steering nozzle installed in place (figure 2a) and a second surface remaining invisible and setting against the supply air device in the steering nozzle installed in place (figure 2b). The first surface of the lid is substantially straight and flat. In the middle area of the lid there is the first flow aperture 124, which is substantially semicircular and opening to the first surface. The straight side of the first flow aperture sets substantially on the same line with the diameter of the lid. On the circumference of the lid, around the first flow aperture there is a number of circular second flow apertures 140 arranged into a shape of a circle. The second flow apertures extend through the lid and open to the first surface of the lid in the same way as the first flow aperture. The diameter of the second flow apertures is preferably 2 - 7 mm. In Figures 2a and 2b, the second flow apertures are circular, but they can also be of some other shape, such as oval or polygons.

On the second surface of the lid (Figure 2b) there is a circulating round rim 150, the outer diameter of which is substantially equal to the outer diameter of the lid. The collar 126 extending from the edge of the lid sets thus substantially entirely outside the area defined by the rim. The height of the rim, i.e. the distance of its free edge from the second surface of the collar, is preferably 2 - 5 mm. On the outer circle of the rim, at the junction point of the lid and rim, there is the slot 128, to which the edge of the flow orifice of the casing of the supply air device can be fitted. In the embodiment shown in Figure 2b the slot is continuous and circles around the entire rim. Alternatively the slot can be a piecewise continuous slot line in the form of a ring and consisting of short partial slots. The piecewise continuous slot line can be formed by small projections or protrusions arranged to the surface of the rim so that each partial slot is formed to the outer surface of the rim between a single projection or protrusion and the collar.

The slot 128 functions as an adhesion organ by means of which the steering nozzle attaches to the flow orifice on the wall of the casing of the supply air device. Alternatively the rim 150 can be formed slightly conical so that the diameter of the base section of the rim is slightly bigger than the diameter of the flow orifice. In this case the steering nozzle can be pressed tightly in place to the flow orifice so that the free edge of the flow orifice sinks slightly into the rim made of a plastic material. Then it is not necessary to separately form a finished slot to the rim for the edge of the flow orifice.

The second flow apertures 140 extending through the lid open to the second edge of the lid inside an area defined by the rim. There is a steering pipe 142 around each second flow aperture, extending outwards from the second surface of the lid. The length of the steering pipe is substantially equal to or slightly bigger than the diameter of the second flow aperture. The direction of the steering pipe can be substantially perpendicular to the plane of the lid (as in Figure 2b) or it can extend in a direction deviating from the right angle in relation to the plane of the lid. The secondary flow flowing through the second flow apertures is directed to flow to the second flow direction S by means of the steering pipes. In the embodiment illustrated in Figures 2a and 2b, the steering pipes 142 are substantially in a perpendicular position in relation to the plane of the lid 144 so that the second flow direction S of the secondary flow is substantially perpendicular to the lid.

On the second surface of the lid 144 there is a tubular flow guide 148, the first end of which connects to the lid to surround the first flow aperture 124. The second end of the flow guide 148 is open so that air can flow through the steering nozzle via the flow guide and first flow aperture. The wall of the flow guide has two curved steering surfaces 130, which force the air flow exiting from the first flow aperture 124, i.e. the primary flow, to turn to the first flow direction F towards the plane of the lid 144. The length of the flow guide, i.e. the distance of the second end of it from the second surface of the lid 144 is selected so that the desired effect directing the primary flow is achieved with the flow guide and the steering surfaces belonging to it. Preferably the length of the flow guide is 1 - 5 cm. The free edges of the steering surfaces belonging to the flow guide can extend to the same distance from the lid or to different distances, as in Figure 2b. By adjusting the distance between the free edge of the steering surfaces and the lid it is possible to influence the amount of air flow directed to the first flow aperture through the flow guide.

The steering nozzle is made of a suitable flexible material, such as soft plastic or silicone. The steering nozzle is preferably made as a one-piece part. Alternatively the steering nozzle can be made of two or more parts joined together, which may consist of different materials. For example, the flow guide for the steering nozzle can be a separate part attached to the lid of the steering nozzle. The lid and the collar can be made of a softer and more flexible material than the other parts of the steering nozzle.

The second flow apertures in the steering nozzle are substantially of a smaller size than the first flow apertures. In each flow guide the number, size and location of the second flow apertures can be chosen in a desired manner. Preferably the diameter of the second flow apertures is 2 - 7 mm. Second flow apertures can be arranged in a ring-shaped formation around the first flow aperture or only at the place where the flow direction of the primary flow discharges from the first flow orifice. The added area of the second flow apertures in relation to the area of the first flow orifice can be selected. A large number and a large added cross-sectional area of the second flow apertures promotes the mixing of air flows, but at the same time it reduces the directional effect of air flow by the steering nozzle.

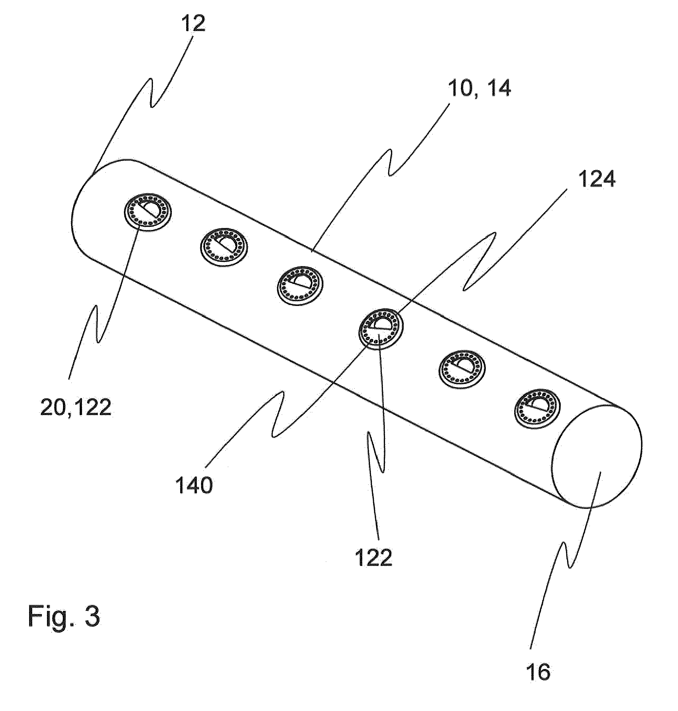

In Figure 3 there is illustrated the supply air nozzle shown in Figures 2a and 2b, installed in a supply air device. The supply air device has an elongated casing 10 with a cylindrical wall 14. In the first end of the casing there is provided a circular lid 16 which closes the first end of the casing substantially air-tightly. The second end of the casing is open so that it forms an inlet assembly 12 for the air flowing into the casing. The inlet assembly can be connected to the end of a ventilation duct by conventional connection pieces for ventilation ducts. The wall 14 and lid 16 of the casing are made of a metal plate, preferably a steel plate.

The casing wall has a number of flow orifices 20, through which a flow path for air opens from inside the casing 10 to outside of the casing. The flow orifices are arranged in lines at a distance from each other so that there are flow orifices substantially along the whole length of the casing. The flow orifices are shaped as circular apertures, the diameter of which is preferably 3 - 8 cm. In Figure 3 there is illustrated one line of flow orifices, but there may also be some other number of flow orifice lines, such as two, three, four or five. Each flow orifice is provided with a steering nozzle 122 of the invention, which is used for changing the flow direction of the air flow flowing through the flow orifice. The size of the steering nozzle is dimensioned so that the flexible rim can be fitted into the flow orifice 20 in the wall 14 of the casing so that the edge of the flow orifice 20 sets into the slot in the rim with a tight fit. The steering nozzle installed in place in the flow orifice can be rotated around the central axis so that the steering nozzle steers the air flow exiting from the first flow aperture to the desired direction.

The air flow exiting from the casing through the steering nozzle is divided in the steering nozzle into the primary flow flowing through the first flow aperture 124 and the secondary flow flowing through the second flow apertures 140. The primary flow and part of the secondary flow are directed to intersect each other immediately after leaving the flow guide so that the flows are mixed with each other. The mixing of flows causes turbulence, which promotes the mixing of fresh supply air with indoor air. The secondary flow also changes the direction of the primary flow by turning it away from the surface of the casing of the supply air device, which prevents the dirt and dust particles moving along with the primary flow from adhering to the surface of the casing of the supply air device.

In the supply air device explained above the second flow apertures are arranged in the steering nozzle. It is also possible to carry out the supply air device so that second flow apertures are arranged as aperture groups, for example, in the form of a circle to the wall of the casing of the supply air device in the immediate vicinity of the steering nozzle. These flow apertures arranged to the wall of the casing can be used for replacing at least part of the flow apertures in the steering nozzle in some circumstances.

Some advantageous embodiments of the air flow steering nozzle and supply air devices of the invention have been explained above. The invention is not restricted to the solutions explained above, but the inventional idea can be applied in different ways within the limits set by the patent claims.

## Claims

1. Steering nozzle of an air flow (22, 122), which has a first flow aperture (24, 124) and a directing organ for steering the air flow to be led through the first flow aperture to the first flow direction (F), **characterized in that** the steering nozzle further has at least one second flow aperture (40, 140), the second flow aperture (40, 140) being arranged to steer the air flow led through it to a second flow direction (S) intersecting with the first flow direction (F).

2. Steering nozzle (22, 122) according to claim 1, **characterized in that** the first flow aperture (24, 124) has a first cross-sectional area and the second flow aperture/apertures (40, 140) has a second cross-sectional area, the second cross-sectional area being substantially smaller than the first cross-sectional area.

3. Steering nozzle (22, 122) according to claim 1 or 2, **characterized in that** the steering nozzle (22, 122) comprises a number of second flow apertures (40, 140), the second flow apertures (40, 140) being arranged as a group of apertures in the vicinity of the first flow aperture (24, 124) so that at least a part of the second flow apertures (40, 140) is arranged to steer the air flow led through them to the second flow direction (S) intersecting with the first flow direction (F).

4. Steering nozzle (22, 122) according to one of the claims 1 - 3, **characterized in that** the said second flow apertures (40, 140) are arranged as groups of apertures into a shape of an arc of a circle, at least partly surrounding the first flow apertures (24, 124).

5. Steering nozzle (22, 122) according to one of the claims 1 - 4, **characterized in that** the added cross-sectional area of the second flow apertures (40, 140) arranged to steer the air flow to the second flow direction (S) intersecting with the first flow direction (F) is smaller than the cross-sectional area of the first flow aperture (24, 124).

6. Steering nozzle (22, 122) according to one of the claims 1 - 5, **characterized in that** the said directing organ comprises a steering surface (30, 130) arranged in connection with at least one first flow aperture (24, 124).

7. Steering nozzle (22, 122) according to one of the claims 1 - 6, **characterized in that** in connection with the second flow apertures (40, 140) there is a directing device for directing the air flow to be led through the second flow apertures (40, 140).

8. Steering nozzle (22, 122) according to claim 1, **characterized in that** said directing organ comprises a steering pipe (42, 142) arranged as an extension of the second flow aperture (40, 140).

9. Steering nozzle (22, 122) according to one of the claims 1 - 8, **characterized in that** the steering nozzle (22, 122) has a lid (44, 144) provided with a first surface and second surface, the first flow aperture (24, 124) and the second flow apertures (40, 140) being arranged to the lid (44, 144).

10. Steering nozzle (22, 122) according to claim 9, **characterized in that** the first surface of the lid (44, 144) is substantially flat and the said directing organs and the said directing instruments are arranged to the second surface of the lid.

11. Steering nozzle (22, 122) according to one of the claims 1 - 10, **characterized in that** the steering nozzle (22, 122) has adhesion organs for attaching to the flow orifice (20) in the wall (14) of the supply air device.

12. Steering nozzle (22, 122) according to claim 11, **characterized in that** the said adhesion organs comprise a continuous or piecewise continuous slot (28, 128), to which the free edge (18) of the flow orifice (20) can be fitted.

13. Supply air device, which has a casing (10) with an inlet assembly (12) for connecting to the supply air duct and a wall (14), which has at least one first flow aperture (24, 124), an directing organ for steering the air flow to be led through the first flow aperture to the first flow direction (F) and a number of second flow apertures (40, 140), **characterized in that** the said second flow apertures (40, 140) are arranged as groups of apertures in the vicinity of the first flow apertures (24, 124) so that at least part of the second flow apertures (40, 140) in the vicinity of each first flow aperture (24, 124) is arranged to steer the air flow to be led through them to the second flow direction (S) intersecting with the first flow direction (F).

14. Supply air device according to claim 13, **characterized in that** the said second flow apertures (40, 140) are formed to the wall (14) of the casing (10).

15. Supply air device according to claim 13, **characterized in that** there is at least one flow orifice (20) in the wall (14) of the casing (10), the flow orifice having a steering nozzle (22, 122) of an air flow and that the said first flow apertures (24, 124) and the second flow apertures (40, 140) are arranged to the said steering nozzles (22, 122).
